# EUROPÄISCHE PATENTSCHRIFT

(11) **EP 3 501 772 B1**
(45) Veröffentlichungstag und Bekanntmachung des Hinweises auf die Patenterteilung: **19.05.2021**
(21) Anmeldenummer: 18200295.6
(22) Anmeldetag: 15.10.2018
(51) Int. Cl.: B29B 7/28, B29B 7/74, B29B 7/12, B29B 7/18

(54) **VERFAHREN ZUR HERSTELLUNG EINER KAUTSCHUKMISCHUNG, UND DARAUF BEZOGENE MISCHVORRICHTUNG**
METHOD FOR PRODUCTION OF A RUBBER MIXTURE, AND RELATED MIXING DEVICE
PROCÉDÉ POUR LA FABRICATION D'UN MÉLANGE DE CAOUTCHOUC, ET MÉLANGEUR ASSOCIÉ

(30) Priorität: 21.12.2017 DE 102017223554
(43) Veröffentlichungstag der Anmeldung: 26.06.2019
(73) Patentinhaber: Continental Reifen Deutschland GmbH, 30165 Hannover (DE)
(72) Erfinder: Wortmann, Christopher, 30851 Langenhagen (DE); Steiner, Frank Stefan, 30167 Hannover (DE)
(74) Vertreter: Continental Corporation

(56) Entgegenhaltungen:
- EP-A1- 1 213 110
- EP-A2- 1 382 425
- CN-A- 106 313 362
- CN-U- 205 058 349
- DE-A1- 4 024 863
- JP-A- H1 157 445
- JP-A- S57 110 328
- US-A- 5 865 535
- Röthemeyer F., Sommer F.: "Kautschuktechnologie - Werkstoffe, Verarbeitung, Produkte", , 2001, Seiten 374-388, XP002788633, ISBN: 978 3 446 16169 6 Gefunden im Internet: URL:http://www.beck-shop.de/fachbuch/lesep robe/9783446161696_Excerpt_004.pdf [gefunden am 2019-02-05]
- PETER J ET AL: "DAS TANDEM- MISCHVERFAHREN (TEIL 4)", KAUTSCHUK UND GUMMI - KUNSTSTOFFE, HUTHIG VERLAG, HEIDELBERG, DE, vol. 46, no. 7, 1 July 1993 (1993-07-01), pages 545-549, XP000384143, ISSN: 0948-3276

## Beschreibung

Die Erfindung betrifft ein Verfahren zur Herstellung einer Kautschukmischung und eine Mischvorrichtung zur Durchführung des Verfahrens.

Zur Herstellung von Kautschukmischungen werden in der Reifenindustrie häufig Innenmischer verwendet, in denen das Mischgut geknetet wird. Beim Kneten des Mischguts entsteht dabei in der Regel Wärme aufgrund der Scherkräfte zwischen den einzelnen Bestandteilen des Mischguts. Die Scherkräfte haben den Vorteil, dass sie ein effektives Mischen des Mischguts ermöglichen. Jedoch ist die durch die Scherkräfte auftretende Wärmeentwicklung insoweit nachteilig, dass die Gefahr einer Überhitzung der Bestandteile des Mischguts besteht. Aufgrund dieser Gefahr der Überhitzung darf das Mischgut nicht zu schnell verknetet werden, wodurch die Mischzeit zur Herstellung der Kautschukmischung verlängert wird.

Im Stand der Technik (DE 2058975 A1) ist ein Verfahren zum Herstellen von Kautschukmischungen in Innenmischer durch Kneten bekannt, bei dem "durch Temperaturanzeige gesteuerte Kühlung" erfolgt (siehe Anspruch 1).

In der CN 205 058 349 U ist eine Vorrichtung zur umfassenden Nutzung von Umlaufwasser für die Gummiproduktion beschrieben. Die Vorrichtung umfasst ein Banbury Mischer, einen Filterextruder und einen Kühlteich, wobei der beschriebene Banbury Mischer und der Filterextruder jeweils einen Einlass für das Umlaufwasser und einen Auslass für das Umlaufwasser aufweisen. Der Einlass für das Umlaufwasser den Banbury Mischer ist mit dem beschriebenen Kühlteich verbunden.

Ferner ist in der JP H11 57445 A ein Knet-Steuerverfahren für eine geschlossene Knetvorrichtung offenbart, wobei durch das Kneten unter Kühlung und Druckbeaufschlagung ein Kneterzeugnis einer vorbestimmten Qualität erhältlich ist. Die Steuerelemente (Kühlung, Druckbeaufschlagung, Kneten) werden unabhängig gesteuert.

Außerdem ist in der JP S57 110328 A eine Knetvorrichtung zur Durchführung des Knetens einer Substanz ohne Unregelmäßigkeiten beschrieben, bei der die Viskosität und die Schergeschwindigkeit der zu knetenden Substanz erfasst werden kann.

Die Aufgabe, die der Erfindung zugrunde liegt, besteht darin, ein Verfahren bereit bereitzustellen, welches die Herstellung einer Kautschukmischung beschleunigt und/oder die im Stand der Technik auftretenden Nachteile reduziert oder vermeidet.

Gelöst wird diese Aufgabe durch ein Verfahren gemäss Anspruch 1 zur Herstellung einer Kautschukmischung umfassend die folgenden Schritte:
a) Bereitstellen oder Herstellen von Kautschukmischungsbestandteilen,
b) Bereitstellen einer Mischvorrichtung zum Mischen von Kautschukmischungen, wobei die Mischvorrichtung
   i. eine erste Mischkammer der mehr als einen Mischkammern der Mischvorrichtung, wobei die erste Mischkammer von einem ersten Kammergehäuse, einer ersten Einwurfsöffnung und einer ersten Auswurfsöffnung begrenzt wird,
   ii. einen, zwei oder mehr als zwei Rotoren zum Mischen einer Kautschukmischung innerhalb der ersten Mischkammer und innerhalb einer der weiteren Mischkammern
      und
   iii. ein fluides Medium zum Temperieren der ersten Mischkammer umfasst,
c) Temperieren des fluiden Mediums in einer Vorbereitungsphase auf eine Vorbereitungstemperatur im Bereich von 30 °C bis 160 °C,
d) Hinzufügen zumindest eines Teils der in Schritt a) bereitgestellten oder hergestellten Kautschukmischungsbestandteile in die Mischkammer der Mischvorrichtung,
e) Temperieren des in Schritt c) temperierten fluiden Mediums in einer Mischphase auf eine Mischtemperatur im Bereich von 40 °C bis 160 °C,
   und
f) Temperieren des in Schritt e) temperierten fluiden Mediums in einer Abkühlphase auf eine Abkühltemperatur im Bereich von 4 °C bis 60 °C,
wobei eine programmierbare Regelkomponente die Temperatur des fluiden Mediums für jeden einzelnen der Mischschritte von c) bis f) individuell ansteuert oder regelt.

Bevorzugte Ausführungen des erfindungsgemässen Verfahrens sind in den abhängigen Ansprüchen beansprucht.

Bevorzugt werden in Schritt d) eines vorstehend definierten Verfahrens sämtliche der in Schritt a) bereitgestellten oder hergestellten Kautschukmischungsbestandteile in die Mischkammer der Mischvorrichtung hinzugefügt.

Im Rahmen der vorliegenden Erfindung ist es ausreichend, wenn in der Vorbereitungsphase, in der Mischphase und/oder in der Abkühlphase nur ein Teil des temperierten fluiden Mediums auf den jeweiligen Temperaturbereich erreicht, bevorzugt der Anteil des fluiden Mediums, welcher zur Mischkammer oder ihren Komponenten hinfließt. Besonders bevorzugt ist es jedoch wenn das gesamte fluide Medium in der Vorbereitungsphase im Bereich der Vorbereitungstemperatur, in der Mischphase im Bereich der Mischtemperatur und in der Abkühlphase im Bereich der Abkühltemperatur liegt. Die Vorbereitungstemperatur, die Mischtemperatur und die Abkühltemperatur beziehen sich jeweils auf die Temperatur des fluiden Mediums in dem dazugehörigen Verfahrensschritt eines vorstehend definierten Verfahrens.

Der Vorteil der vorliegenden Erfindung ist, dass durch das genaue Regeln der Temperatur des fluiden Mediums in jedem einzelnen Verfahrensschritt eines vorstehend definierten Verfahrens die Temperatur der herzustellenden Kautschukmischung schneller eingestellt werden kann. Hierbei ist insbesondere vorteilhaft, wenn in einer Vorbereitungsphase wie vorstehend in Schritt c) beschrieben die Temperatur des fluiden Mediums so eingestellt wird, dass die in Schritt d) hinzugefügten Kautschukmischungsbestandteile schnellstmöglich auf die gewünschte Mischtemperatur erhitzt werden. Das fluide Medium sollte beispielsweise eine möglichst hohe Vorbereitungstemperatur aufweisen, um die Mischvorrichtung und somit auch solche Kautschukmischungsbestandteile möglichst schnell zu erhitzen, welche in Schritt d) hinzugefügt werden und eine besonders hohe spezifische Wärmekapazität aufweisen. Weisen jedoch einige der in Schritt d) hinzugefügten Kautschukbestandteile bereits eine hohe Temperatur auf, so ist es vorteilhaft die Vorbereitungstemperatur des fluiden Mediums vorstehend definiert in Schritt c) entsprechend niedriger zu wählen. Insbesondere beim Wechsel der Kautschukmischungsrezeptur muss eine möglichst schnelle Temperaturanpassung erfolgen, welche mithilfe eines vorstehend definierten Verfahrens oder mithilfe einer nachstehend beschriebenen erfindungsmäßen Mischvorrichtung beschleunigt werden kann. Somit ermöglicht ein erfindungsmäßen Verfahren eine schnellere Herstellung von Kautschukmischungen gegenüber einem Verfahren aus dem Stand der Technik.

Bevorzugt ist ein Verfahren wie vorstehend beschrieben, wobei die Kautschukmischungsbestandteile in Schritt d) in eine Mischkammer einer Mischvorrichtung hinzugefügt werden, wobei das fluiden Medium der Mischvorrichtung bereits auf eine Vorbereitungstemperatur wie in Schritt c) eines vorstehend definierten Verfahrens beschrieben temperiert wurde.

Im Rahmen der vorliegenden Erfindung bedeutet der Ausdruck "temperieren" bevorzugt, dass ein Gegenstand erhitzt wird, gekühlt wird oder konstant bei seiner Temperatur gehalten wird.

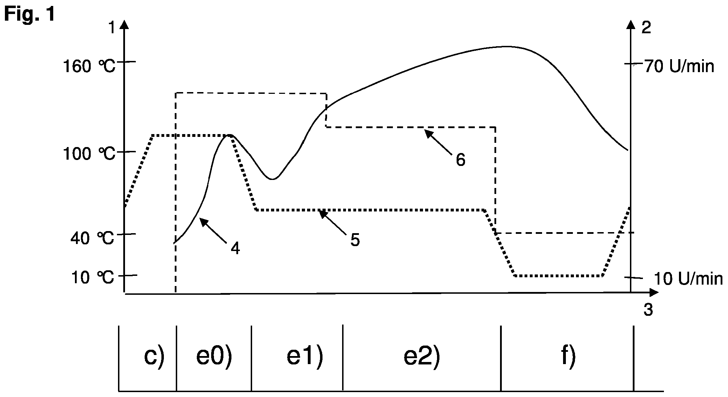

Im Rahmen der vorliegenden Erfindung können die verschiedenen Phasen oder Verfahrensschritte eines vorstehend definierten Verfahrens in weitere Unterphasen oder Unterschritte unterteilt werden und die Reihenfolge der Verfahrensschritte wie in Figur 1 schematisch dargestellt nicht notwendigerweise festgeschrieben ist. Insbesondere können Abkühlphasen und Heizphasen, wie beispielsweise die Vorbereitungsphase in Figur 1, in unterschiedlicher Reihenfolge erfolgen als die vorstehend oder nachstehend beschrieben ist.

Bevorzugt ist ein Verfahren wie vorstehend beschrieben oder wie vorstehend als bevorzugt beschrieben, wobei die in Schritt b) bereitgestellten Mischvorrichtung mindestens zwei Mischkammern aufweist, welche besonders bevorzugt übereinander angeordnet sind. Eine vorstehend beschriebene Mischvorrichtung ist insbesondere ein Tandemmischer. Bei einer nachstehend definierten Mischvorrichtung mit zwei Mischkammern oder einem nachstehend definierten Tandemmischers ist es besonders vorteilhaft, wenn die beiden Mischkammern unabhängig voneinander temperiert werden können, da in den beiden Mischkammern unterschiedliche Temperaturen vorliegen.

Dies hat den Vorteil, dass insbesondere beim Wechsel der Mischungsrezeptur die Temperatur der ersten Mischkammer unabhängig von der Temperaturanpassung der zweiten Mischkammer vollzogen werden kann. Bevorzugt liegen in der ersten und in der zweiten Mischkammer jeweils zwei Rotoren vor.

Bevorzugt ist ein Verfahren wie vorstehend beschrieben oder wie vorstehend als bevorzugt beschrieben, wobei die erste Mischkammer genau zwei Rotoren umfasst. Das gleiche gilt in einer vorstehend beschriebenen bevorzugten Ausführungsform für eine zweite Mischkammer, insbesondere für Tandemmischer.

Bevorzugt ist ein Verfahren wie vorstehend beschrieben oder wie vorstehend als bevorzugt beschrieben, wobei die in Schritt b) bereitgestellten Mischvorrichtung mindestens zwei Mischkammern, mindestens ein erstes fluides Medium zum Temperieren der ersten Mischkammer und mindestens ein zweites fluides Medium zum Temperieren der zweiten Mischkammer umfasst.

Der vorstehend beschriebene Aspekt der vorliegenden Erfindung hat den Vorteil, dass die erste und zweite Mischkammer durch unterschiedliche Temperierkreisläufe und somit effektiv und unabhängig voneinander erhitzt oder gekühlt werden können. Dies gilt insbesondere für ein vorstehend definiertes Verfahren, wobei die in Schritt b) bereitgestellte Mischvorrichtung ein Tandemmischer ist.

Noch bevorzugter ist ein Verfahren wie vorstehend beschrieben oder wie vorstehend als bevorzugt beschrieben, wobei die in Schritt b) bereitgestellten Mischvorrichtung mindestens zwei Mischkammern jeweils umfassend einen Sattel, zwei Rotoren und ein Kammergehäuse und acht fluide Media umfasst, wobei jedes der acht Media nur eine Komponente ausgesucht aus den zwei Sätteln, den vier Rotoren und den zwei Kammergehäusen der zwei Mischkammern temperiert.

Der vorstehend beschriebene Aspekt der vorliegenden Erfindung hat den Vorteil, dass die verschiedenen Komponenten der beiden Mischkammern durch acht unterschiedliche Temperierkreisläufe und somit effektiv und unabhängig voneinander temperiert werden können.

Bevorzugt ist auch ein Verfahren wie vorstehend beschrieben oder wie vorstehend als bevorzugt beschrieben, wobei das erste fluide Medium durch entsprechende Aussparungen innerhalb des Kammergehäuses der ersten Mischkammer und/oder der Rotoren der ersten Mischkammer zirkuliert wird, um das Kammergehäuse der ersten Mischkammer und/oder die Rotoren der ersten Mischkammer zu temperieren. Entsprechendes gilt für eine zweite Mischkammer, insbesondere im Falle eines Tandemmischers. Auch der Sattel und/oder der Stempel einer ersten oder einer zweiten Mischkammer in einem vorstehend definierten Verfahren können die vorstehend beschriebenen Aussparungen für ihre Temperierung aufweisen. Die Aussparungen sind bevorzugt Durchgangsbohrungen für die Kühlung mit dem fluiden Medium, wobei die Durchgangsbohrungen im Kammergehäuse, im Sattel, im Rotor oder im Stempel sind.

Bevorzugt umfasst Schritt d) eines vorstehend definierten Verfahrens auch das Mischen der hinzugefügten Kautschukmischungsbestandteile durch den einen oder durch die zwei oder mehr als zwei Rotoren der Mischvorrichtung. Ganz besonders bevorzugt findet das vorstehend beschriebene Mischen in Schritt d) statt, nachdem das eine oder das mehr als eine fluide Medium der Mischvorrichtung bereits auf eine Vorbereitungstemperatur wie in Schritt c) beschrieben erhitzt wurde.

Bevorzugt ist ein Verfahren wie vorstehend beschrieben oder wie vorstehend als bevorzugt beschrieben, wobei in Schritt c) des fluiden Mediums in einer Vorbereitungsphase auf eine Vorbereitungstemperatur im Bereich von 80 bis 90 °C temperiert wird.

Bevorzugt ist ein Verfahren wie vorstehend beschrieben oder wie vorstehend als bevorzugt beschrieben, wobei in Schritt f) des fluiden Mediums in einer Vorbereitungsphase auf eine Vorbereitungstemperatur im Bereich von 10 °C bis 30 °C temperiert wird. Bevorzugt liegt die minimale Vorbereitungstemperatur über dem Taupunkt der Umgebungsluft, da so vorteilhafterweise so kein aus der Luft kondensiertes Wasser in Kautschukmischung gelangen kann. Im Rahmen der vorliegenden Erfindung ist der Taupunkt, auch die Taupunkttemperatur genannt, bei Luft mit einer bestimmten Luftfeuchtigkeit diejenige Temperatur, die bei konstantem Druck unterschritten werden muss, damit sich Wasserdampf als Tau oder Nebel abscheiden kann.

Ferner ist ein nicht erfindungsgemäßes Verfahren beschrieben, wobei
- in Schritt c) des fluiden Mediums in einer Vorbereitungsphase auf eine Vorbereitungstemperatur im Bereich von 35°C bis 100 °C temperiert wird,
- in Schritt e) des fluiden Mediums in einer Mischphase auf eine Mischtemperatur im Bereich von 100°C bis 160 °C temperiert wird
   und
- in Schritt f) des fluiden Mediums in einer Abkühlphase auf eine Abkühltemperatur im Bereich von 4 °C bis 35 °C temperiert wird.

Bei dem nicht erfindungsgemäßen vorstehend beschriebenen Aspekt tritt
- das Ende der Vorbereitungsphase und das Anfang der Mischphase bei einem Übergang der Temperatur des fluiden Mediums von 100 °C auf über 100 °C ein,
- das Ende der Mischphase und das Anfang der Abkühlphase bevorzugt bei einem Übergang der Temperatur des fluiden Mediums von über 35 °C auf 35 °C oder weniger ein
   und
- das Ende der Abkühlphase und das Anfang der Vorbereitungsphase bevorzugt bei einem Übergang der Temperatur des fluiden Mediums von 35 °C auf über 35 °C ein.

Bei dem vorstehenden bevorzugten Aspekt der vorliegenden Erfindung können die einzelnen Phasen aber auch bevorzugt wie folgt definiert werden:
- das Ende der Vorbereitungsphase und das Anfang der Mischphase treten ein, wenn die Drehzahl der Rotoren der Mischkammer auf über 40 U/min steigt,
- das Ende der Mischphase und das Anfang der Abkühlphase treten ein, wenn die Drehzahl der Rotoren der Mischkammer auf unter 40 U/min sinkt, und
- das Ende der Abkühlphase und das Anfang der Vorbereitungsphase treten ein, wenn die Kautschukmischungsbestandteile aus der Mischkammer entfernt werden.

Im Rahmen der vorliegenden Erfindung ist das Ende und der Anfang des Schritts c) eines erfindungsmäßen Verfahrens besonders bevorzugt wie folgt definiert:

Der Anfang ist das Auswerfen der hergestellten Kautschukmischung aus der ersten oder der zweiten Mischkammer und das Ende ist das Hinzufügen der

Kautschukmischungsbestandteile in die erste oder zweite Mischkammer wie in Schritt d) eines vorstehend definierten Verfahrens beschrieben.

Im Rahmen der vorliegenden Erfindung ist das Ende und der Anfang des Schritts e) eines erfindungsmäßen Verfahrens besonders bevorzugt wie folgt definiert:
Der Anfang ist das Hinzufügen des ersten Kautschukmischungsbestandteiles in die erste oder zweite Mischkammer in Schritt d) eines vorstehend definierten Verfahrens und das Ende ist der Punkt, an dem zumindest ein Teil des fluiden Mediums eine Temperatur von unter 60 °C erreicht.

Im Rahmen der vorliegenden Erfindung ist das Ende und der Anfang des Schritts f) eines erfindungsmäßen Verfahrens besonders bevorzugt wie folgt definiert:

Der Anfang ist der Punkt, an dem zumindest ein Teil des fluiden Mediums eine Temperatur von unter 60 °C erreicht, und das Ende ist das Auswerfen der hergestellten Kautschukmischung aus der ersten oder zweiten Mischkammer.

Bevorzugt ist auch ein Verfahren wie vorstehend beschrieben oder wie vorstehend als bevorzugt beschrieben, wobei die in Schritt a) bereitgestellten oder hergestellten Kautschukmischungsbestandteile zumindest einen Kautschuk und zumindest einen Füllstoff umfassen.

Ein Vorteil des vorstehend beschriebenen Aspekts ist, dass beim Einwerfen dieser Mischungsbestandteile in die eine oder die erste Mischkammer die Temperatur in der Mischkammer sinkt und es daher vorteilhaft ist, eine entsprechende Vorbereitungstemperatur zu wählen.

Besonders bevorzugt ist ein Verfahren wie vorstehend beschrieben oder wie vorstehend als bevorzugt beschrieben, wobei die Schritte e) und f) die folgenden Schritte umfassen:
e1) Temperieren des in Schritt c) temperierten fluiden Mediums in einer ersten Mischphase auf eine erste Mischtemperatur im Bereich von 70 °C bis 160 °C, bevorzugt auf eine Temperatur von 70 °C bis 130 °C,
e2) Temperieren des in Schritt e1) temperierten fluiden Mediums in einer zweiten Mischphase auf eine zweite Mischtemperatur im Bereich von 40 °C bis 160 °C, bevorzugt auf eine Temperatur von 50 °C bis 110 °C,
   und
f) Temperieren des in Schritt e2) temperierten fluiden Mediums in einer Abkühlphase auf eine Abkühltemperatur im Bereich von 4 °C bis 60 °C.

Ein Vorteil des vorstehend beschriebenen Aspekts der vorliegenden Erfindung ist, dass die üblicherweise in der Kautschukindustrie verwendeten Kautschukbestandteile unterschiedliche spezifische Wärmekapazitäten aufweisen und daher Wärme unterschiedlich aufnehmen. Je nach spezifischer Wärmekapazität oder entstehender Scherkräfte zwischen den Kautschukmischungsbestandteilen beim Mischen ist es sinnvoll, die Mischkammer oder die einzelnen Komponenten der Mischkammer unterschiedlich zu temperieren. Diese ermöglicht es insbesondere, solche Kautschukbestandteile gut zu vermischen, welche wie beispielsweise Weichmacher an den Oberflächen der verschiedenen Komponenten der Mischkammer haften und somit ein effektives Durchmischen der Kautschukbestandteile reduzieren oder vermeiden. Zudem gelten die nachstehend beschriebenen Vorteile des Aspektes zu den Schritten e0), e1) und e2) oder den nachstehend beschriebenen Aspekten a. und b. zu dem Schritt e1).

Ganz besonders bevorzugt ist auch ein Verfahren wie vorstehend als besonders bevorzugt beschrieben, wobei der Schritt e1) die folgenden Schritte umfassen:
e0) Temperieren des in Schritt c) temperierten fluiden Mediums in einer Vormischphase auf eine Vormischtemperatur im Bereich von 70 °C bis 160 °C, bevorzugt auf eine Temperatur von 100 bis 130 °C,
e1) Temperieren des in Schritt e0) temperierten fluiden Mediums in einer ersten Mischphase auf eine erste Mischtemperatur im Bereich von 70 °C bis 130 °C, bevorzugt auf eine Temperatur von 70 bis 100 °C.

Ein Vorteil des vorstehend beschriebenen Aspekts ist, dass das Reduzieren der Temperatur des fluiden Mediums im Schritt e1) es ermöglicht, bei höheren Drehzahlen wie nachstehend beschrieben zu mischen und somit eine schnellere Durchmischung zu erreichen. Dabei steigt die Temperatur der Kautschukmischung bevorzugt nicht über 200 °C an, da das fluide Medium die vorstehend beschriebenen oder vorstehend als bevorzugt beschriebenen Temperaturen aufweist.

Der vorstehend beschriebene Aspekt ist besonders bevorzugt bei Kautschukmischungen mit hohem Gehalt an Füllstoffen wie Kieselsäure und/oder Rußen, ganz besonders bevorzugt bei einem Gesamtfüllstoffanteil von über 70 phr, insbesondere ganz besonders bevorzugt bei einem Gesamtfüllstoffanteil von über 100 phr. Zudem gelten die vorstehend beschriebenen Vorteile des Aspektes zu den Schritten e1) und e2) oder den nachstehend beschriebenen Aspekten a. und b. zu dem Schritt e1).

Ganz besonders bevorzugt ist auch ein Verfahren wie vorstehend als besonders bevorzugt beschrieben oder wie vorstehend als ganz besonders bevorzugt beschrieben, wobei in Schritt e1):
a. die erste Mischtemperatur stetig oder konstant sinkt, bevorzugt konstant sinkt,
   und/oder
b. weitere Mischungsbestandteile zu den Kautschukmischungsbestandteilen oder der Kautschukmischung in die Mischkammer hinzugefügt werden, wobei die weiteren Mischungsbestandteile mindestens eine, mindestens zwei oder mindestens drei Verbindungen umfassen ausgesucht aus der Gruppe bestehend aus: Wachsen, Ölen, Alterungsschutzmitteln und Stearinsäure. Allgemeiner gesagt, umfassen die vorstehend beschriebenen Verbindungen als weitere Mischungsbestandteile sämtliche sonstige Verbindungen, welche unter den Mischbedingungen der Schritte c), e), e0), e1), e2) oder f) eines vorstehend definierten Verfahrens zumindest teilweise flüssig vorliegt.

Ein Vorteil des vorstehend beschriebenen Aspekts ist, dass die vorstehend beschriebenen als weitere Mischungsbestandteile hinzugefügten Verbindungen und andere an Oberflächen haftenden Kautschukmischungsbestandteile bei einer niedrigeren Mischtemperatur schneller gemischt werden können. Bevorzugt ist es hierbei, wenn wie vorstehend beschrieben in Schritt e1) die erste Mischtemperatur stetig oder konstant sinkt und sich dies in Schritt e2) für die zweite Mischtemperatur fortsetzt. Zudem gelten die vorstehend beschriebenen Vorteile des Aspektes zu den Schritten e1) und e2) oder den Schritten e0), e1) und e2).

Ganz besonders bevorzugt ist auch ein Verfahren wie vorstehend als besonders bevorzugt beschrieben oder wie vorstehend als ganz besonders bevorzugt beschrieben, wobei die Drehzahl der Rotoren innerhalb der ersten Mischkammer in Schritt e0) und/oder in Schritt e1) im Bereich von 40 bis 70 U/min liegt, bevorzugt im Bereich von 50 bis 60 U/min.

Ein Vorteil des vorstehend beschriebenen Aspekts ist, dass durch die hohen Drehzahlen der Rotoren im vorstehend beschriebenen Drehzahlbereich eine besonders gute Durchmischung solcher Kautschukbestandteile ermöglicht wird.

Bevorzugt ist auch ein Verfahren wie vorstehend beschrieben oder wie vorstehend als bevorzugt beschrieben oder wie vorstehend als besonders bevorzugt beschrieben oder wie vorstehend als ganz besonders bevorzugt beschrieben, wobei die Drehzahl der Rotoren innerhalb der ersten Mischkammer in Schritt e2) und/oder in Schritt f) im Bereich von 10 bis 40 U/min liegt, bevorzugt im Bereich von 20 bis 30 U/min.

Bevorzugt ist auch ein Verfahren wie vorstehend beschrieben oder wie vorstehend als bevorzugt beschrieben oder wie vorstehend als besonders bevorzugt beschrieben oder wie vorstehend als ganz besonders bevorzugt beschrieben, wobei die Drehzahl der Rotoren innerhalb der ersten Mischkammer in Schritt f) und/oder in Schritt e2) kleiner ist als in den Schritten e0) und e1).

Ein Vorteil des vorstehend beschriebenen Aspekts ist, dass aufgrund der niedrigeren Temperaturen während Schritt e2) oder Schritt f) die Drehzahl der Rotoren erhöht werden kann ohne die Temperatur der vermischten Kautschukmischungsbestandteile zu erhöhen und gleichzeitig eine möglichst gute Mischung der Kautschukmischungsbestandteile zu ermöglichen. Zudem ist es auch möglich, in kürzerer Zeit die gleiche Anzahl an Drehungen um die Achse der Rotoren zu erreichen, was zu einer kürzeren Mischzykluszeit führt.

Bevorzugt ist auch ein Verfahren wie vorstehend beschrieben oder wie vorstehend als bevorzugt beschrieben oder wie vorstehend als besonders bevorzugt beschrieben oder wie vorstehend als ganz besonders bevorzugt beschrieben, wobei die Durchflussrate des fluiden Mediums über die gesamte erste Mischkammer in Schritt c) und/oder in Schritt f) größer ist als in dem Schritt e) oder den Schritten e1) und e2) oder den Schritten e0), e1) und e2).

Ein Vorteil des vorstehend beschriebenen Aspekts ist, dass durch die Erhöhung der Durchflussrate in den Schritten f) und c) ein schnellerer Wärme-/Kälteaustausch mit den Komponenten der Mischkammer erfolgen kann. Dies hilft die vorstehend beschriebenen Vorteile schneller zu erreichen, da in den Schritten f) und c) ein schnelle Abkühlen in der Abkühlphase bzw. erneutes schnelles Aufwärmen in der Vorbereitungsphase erzielt werden kann.

Bevorzugt ist auch ein Verfahren wie vorstehend beschrieben oder wie vorstehend als bevorzugt beschrieben oder wie vorstehend als besonders bevorzugt beschrieben oder wie vorstehend als ganz besonders bevorzugt beschrieben, wobei das fluide Medium mindestens eine Verbindung umfasst ausgesucht aus der Gruppe bestehend aus Wasser, Wasserdampf, zwischen 0 °C und 160°C flüssigen Kohlenwasserstoffen, zwischen 0 °C und 160°C flüssigen einwertigen oder mehrwertigen Alkoholen und Öl. Bevorzugt besteht das fluide Medium hauptsächlich oder ganz aus einer Verbindung ausgesucht aus der Gruppe bestehend aus Wasser, Wasserdampf, zwischen 0 °C und 160°C flüssigen Kohlenwasserstoffen, zwischen 0 °C und 160°C flüssigen einwertigen oder mehrwertigen Alkoholen und Öl. Besonders bevorzugt besteht das fluide Medium hauptsächlich oder ganz aus einer Verbindung ausgesucht aus der Gruppe bestehend aus Wasser, Wasserdampf und Öl. Bei den vorstehenden Angaben zu den zwischen 0 °C und 160° flüssigen Kohlenwasserstoffen und Alkoholen muss der flüssige Aggregatszustand zwischen 0 °C und 160° C liegen ansonsten Standardbedingungen (z.B. Atmosphärendruck) vor. Unter den Begriff "Öl" wie vorstehend beschrieben fallen insbesondere Silikonöle und Mineralöle.

Die Vorteile der vorstehend beschriebenen Verbindungen sind nachstehend für eine erfindungsgemäße Vorrichtung näher erläutert.

Bei Wahl einer während des vorstehend definierten Verfahrens flüssigen Verbindung aus den vorstehend beschriebenen Verbindungen als fluides Medium ist die minimale Temperatur zur Verwendung in einem vorstehend definierten Verfahren durch den Gefrierpunkt des gewählten fluiden Mediums beschränkt. Bei einer minimalen Temperatur von 4 °C (vgl. vorstehend eine der Abkühltemperaturen) muss der Gefrierpunkt demnach unter 4 °C liegen oder die minimale Temperatur in der Abkühlphase entsprechend erhöht werden.

Bei Wahl einer während des vorstehend definierten Verfahrens flüssigen Verbindung aus den vorstehend beschriebenen Verbindungen als fluides Medium ist die maximale Temperatur zur Verwendung in einem vorstehend definierten Verfahren durch den Siedepunkt des gewählten fluiden Mediums beschränkt. Bei einer maximalen Temperatur von 160 °C (vgl. vorstehend eine der Vorbereitungsphasen oder Mischphasen) muss der Siedepunkt demnach über 100 °C liegen oder die maximale Temperatur in den Vorbereitungsphasen oder Mischphasen entsprechend verringert werden. Umfasst von diesem Aspekt der Erfindung ist auch, dass der Siedepunkt des fluiden Mediums dadurch erhöht wird, dass ein entsprechendes Pumpsystem zum Zirkulieren des fluiden Mediums verwendet wird, in dem auf das fluide Medium ein Druck über Atmosphärendruck ausgeübt wird. Durch die Druckerhöhung in diesem Pumpsystem kann somit der Siedepunkt des fluiden Mediums erhöht werden.

Die vorstehend beschriebenen Limitierungen bei der Wahl des fluiden Mediums gelten im Rahmen der vorliegenden Erfindung nicht für Gas oder Wasserdampf. Die Verwendung von einer Mischung aus Wasser und Wasserdampf als fluides Medium ist besonders vorteilhaft, da die Zustandsänderung des Wassers in Wasserdampf zusätzliche Wärme von der Mischvorrichtung abführen kann und die Zustandsänderung des Wasserdampfs in Wasser zusätzliche Wärme von der Mischvorrichtung aufnehmen kann.

Ein nicht erfindungsgemäßes Verfahren zur Herstellung einer Kautschukmischung umfasst die folgenden Schritte:
a) Kautschukmischungen, wobei die Mischvorrichtung
   i. eine erste Mischkammer der zwei Mischkammern der Mischvorrichtung, wobei die erste Mischkammer von einem ersten Kammergehäuse, einer ersten Einwurfsöffnung und einer ersten Auswurfsöffnung begrenzt wird,
   ii. zwei Rotoren zum Mischen einer Kautschukmischung innerhalb der ersten Mischkammer
      und
   iii. mindestens ein fluides Medium zum Temperieren der ersten Mischkammer umfasst,
b) Bereitstellen oder Herstellen von Kautschukmischungsbestandteilen,
c) Bereitstellen einer Mischvorrichtung zum Mischen von
d) Temperieren des fluiden Mediums in einer Vorbereitungsphase auf eine Vorbereitungstemperatur im Bereich von 30 °C bis 160 °C,
e0) Temperieren des in Schritt c) temperierten fluiden Mediums in einer Vormischphase auf eine Vormischtemperatur im Bereich von 70 °C bis 160 °C,
e1) Temperieren des in Schritt e0) temperierten fluiden Mediums in einer ersten Mischphase auf eine erste Mischtemperatur im Bereich von 70 °C bis 160 °C,
e2) Temperieren des in Schritt e1) temperierten fluiden Mediums in einer zweiten Mischphase auf eine zweite Mischtemperatur im Bereich von 40 °C bis 160 °C, und
f) Temperieren des in Schritt e2) temperierten fluiden Mediums in einer Abkühlphase auf eine Abkühltemperatur im Bereich von 4 °C bis 60 °C,
wobei
- die in Schritt a) bereitgestellten oder hergestellten
   Kautschukmischungsbestandteile zumindest einen Kautschuk und zumindest einen Füllstoff umfassen
   und
- die Drehzahl der Rotoren innerhalb der ersten Mischkammer in Schritt e0) und/oder in Schritt e1) im Bereich von 60 bis 70 U/min liegt.

Die vorstehend beschriebenen vorteilhaften Aspekte eines erfindungsgemäßen Verfahrens zur Herstellung einer Kautschukmischung gelten auch für sämtliche Aspekte einer nachstehend beschriebenen Vorrichtung und die nachstehend diskutierten vorteilhaften Aspekte erfindungsgemäßer Vorrichtungen gelten entsprechend für sämtliche Aspekte eines erfindungsgemäßen Verfahrens zur Herstellung einer Kautschukmischung.

Offenbart ist auch eine Mischvorrichtung gemäss Anspruch 11 zur Durchführung des erfindungsgemässen Verfahrens gemäß den
vorangehenden Ansprüchen umfassend:
i. eine erste Mischkammer der mehr als einen Mischkammern der Mischvorrichtung, wobei die erste Mischkammer von einem ersten Kammergehäuse, einer ersten Einwurfsöffnung und einer ersten Auswurfsöffnung begrenzt wird,
ii. einen, zwei oder mehr als zwei Rotoren zum Mischen einer Kautschukmischung innerhalb der ersten Mischkammer,
iii. mindestens ein fluides Medium zum Temperieren der ersten Mischkammer
iv. , wobei die Mischvorrichtung aufweist:
   - mehr als eine Mischkammer und einen, zwei oder mehr als zwei Rotoren zum Mischen einer Kautschukmischung innerhalb einer der weiteren Mischkammern
      und
   - eine programmierbare Regelkomponente, wobei die programmbierbare Regelkomponente die Temperatur des fluiden Mediums für jeden einzelnen der Mischschritte von c) bis f) individuell ansteuern oder regeln kann.

Im Rahmen der vorliegenden Erfindung ist eine Regelkomponente zum Temperieren des einen oder des mindestens einen fluiden Mediums beispielsweise ein übliche TCU (Temperature-Controll-Unit) für Mischer.

Erfindungsgemäß ist eine Mischvorrichtung wie vorstehend beschrieben, wobei die Mischvorrichtung eine programmierbare Regelkomponente umfasst, wobei die programmierbare Regelkomponente die Temperatur des fluiden Mediums für jeden einzelnen der Mischschritte von c) bis f) individuell ansteuern oder regeln kann.

Die programmierbare Regelkomponente ist bevorzugt dazu geeignet, dass in der Programmierung der Regelkomponente mindestens zwei unterschiedliche Temperaturen für das mindestens eine fluide Medium für denselben Mischzyklus, also beispielsweise in einem einmaligen Durchlauf der Schritte c) bis f) eines erfindungsgemäßen Verfahrens, eingestellt werden können. Besonders bevorzugt ist eine programmierbare Regelkomponente, welche dazu geeignet, dass das mindestens eine fluide Medium in demselben Mischzyklus, also beispielsweise in einem einmaligen Durchlauf der Schritte c) bis f) eines erfindungsgemäßen Verfahrens, mindestens zwei unterschiedliche Temperaturen zu temperieren.

Bevorzugt ist eine Mischvorrichtung wie vorstehend beschrieben, wobei die Regelkomponente die Temperatur des fluiden Mediums auf verschiedene Temperaturbereiche einstellen kann. Besonders bevorzugt ist es, wenn die Regelkomponente einer erfindungsgemäßen Mischvorrichtung die Temperatur des fluiden Mediums auf mindestens drei verschiedene Temperaturbereiche einstellen kann, wobei die drei Temperaturbereiche sich auf die folgenden Werte beschränken: Einen ersten Temperaturbereich von 0 °C bis 50 °C, einen zweiten Temperaturbereich von 50 °C bis 70 °C und einen dritten Temperaturbereich von 70 °C bis 95 °C. Höhere Temperaturen bis zu 160 °C können mit einem vorstehend beschriebenen Pumpsystem für überatmosphärische Drücke oder durch die Verwendung von Wasserdampf oder einer wässrigen Lösung ermöglicht werden. Die wässrige Lösung umfasst dabei bevorzugt ein Salz zur Erhöhung der Siedetemperatur gegenüber destilliertem Wasser.

Die vorstehenden Temperaturbereiche können insbesondere mit einer wässrigen Lösung oder Wasser erreicht werden und haben den Vorteil, dass aufgrund des relativ hohen Wärmeübergangskoeffizienten von Wasser eine schnelle und effektive Kühlung der Komponenten einer erfindungsgemäßen Mischvorrichtung erreicht werden können.

Bevorzugt ist eine Mischvorrichtung wie vorstehend beschrieben oder wie vorstehend als bevorzugt beschrieben, wobei die Regelkomponente die Temperatur des fluiden Mediums auf mindestens fünf verschiedene Temperaturbereiche einstellen kann, wobei die fünf Temperaturbereiche sich auf die folgenden Werte beschränken: Einen ersten Temperaturbereich von 0 °C bis 40 °C, einen zweiten Temperaturbereich von 40 °C bis 50 °C , einen dritten Temperaturbereich von 70 °C bis 100 °C, einen vierten Temperaturbereich von 100 °C bis 120 °C und einen fünften Temperaturbereich von 120 °C bis 160 °C. Die vorstehenden Temperaturbereiche können insbesondere mit einem zwischen 0 °C und 160° flüssigen Kohlenwasserstoff, mit einem zwischen 0 °C und 160° flüssigen einwertigem oder mehrwertigem Alkohol, einem Öl oder einer Mischung der vorstehenden Substanzen erreicht werden und haben den Vorteil, dass aufgrund ihrer relativ hohen Wärmekapazität besonders viel Wärmeenergie mit den Komponenten einer erfindungsgemäßen Mischvorrichtung ausgetauscht werden kann.

Besonders bevorzugt ist eine Mischvorrichtung wie vorstehend beschrieben oder wie vorstehend als bevorzugt beschrieben, wobei die Regelkomponente die Temperatur des fluiden Mediums gradgenau einstellen kann.

### Figurenbeschreibung:

Figur 1 zeigt eine schematische Darstellung eines Messdiagramms umfassend Messlinien 4, 5, 6 für die Temperaturen der Mischung der Kautschukbestandteile (durchgezogene Linie, Bezugszeichen 4) und des fluiden Mediums (gepunktete Linie, Bezugszeichen 5) sowie die Drehzahl der Rotoren (gestrichelte Linie, Bezugszeichen 6) in der Mischkammer während der Verfahrensschritt c), e0), e1), e2) und f) für eine mögliche Ausführungsform eines erfindungsgemäßen Verfahrens.

In Figur 1 sind aus Gründen der Übersichtlichkeit die Verfahrensschritte a), b) und d) nicht eingezeichnet. Der Schritt d), also das Hinzufügen Kautschukmischungsbestandteilen in die Mischkammer der Mischvorrichtung, erfolgt in dem in Figur 1 dargestellten Zyklus zwischen Verfahrensschritt c) und e0). Dies ist auch der Grund, warum die gepunktete und durchgezogene Messlinien 4, 5 der Messwerte für die Temperatur der Mischung der Kautschukmischungsbestandteile erst in Verfahrensschritt e0) beginnt, das vorher noch keine Messparameter zu den Kautschukmischungsbestandteilen in der Mischkammer vorliegen können.

In dem Verfahrensschritt c) wird die Mischkammer vorbereitet und auf die gewünschte Temperatur für die in Schritt d) hinzuzufügenden Kautschukmischungsbestandteile gebracht. Gleichzeitig können die Kautschukmischungsbestandteile gewogen werden.

In dem Verfahrensschritt e0) erfolgt das Mischen von trockenen und/oder festen Kautschukmischungsbestandteilen. Hier sollte vorteilhafterweise die Drehzahl der Rotoren besonders hoch gehalten werden, damit ausreichend Scherkräfte zwischen den trockenen und/oder festen Kautschukmischungsbestandteilen und somit eine ausreichend starke Vermischung der Kautschukmischungsbestandteile entsteht. Durch das Erhöhen der Temperatur in dem Verfahrensschritt e0) erfolgt eine schnellere Erwärmung der Mischung der Kautschukmischungsbestandteile und gleichzeitig auch eine bessere Vermischung. Dies hilft die Mischzeit, also die Zykluszeit eines erfindungsgemäßen Verfahrens, zu verkürzen.

In dem Verfahrensschritt e1) erfolgt das Mischen von flüssigen und viskosen Kautschukmischungsbestandteilen, insbesondere von Weichmachern wie Ölen. Hier muss die Temperatur der Mischung der Kautschukmischungsbestandteile verringert werden, damit die Drehzahl der Rotoren hoch gehalten werden. Hierdurch werden zudem Schmiereffekte verringert und durch die hohe Drehzahl der Rotoren kann eine verbesserte Vermischung der Kautschukmischungsbestandteile entstehen. Das Verringern der Temperatur des fluiden Mediums in dem Verfahrensschritt e1) hilft somit die Mischzeit, also die die Schritte c) bis f) umfassende Zykluszeit eines erfindungsgemäßen Verfahrens, zu verkürzen.

In dem Verfahrensschritt e2) erfolgt das Mischen der Mischung der Kautschukmischungsbestandteile bis eine ausreichend homogene Kautschukmischung umfassend sämtliche Kautschukmischungsbestandteile resultiert. Die zeitliche Länge des Verfahrensschritts e2) ist somit hauptsächlich abhängig von der materiellen Beschaffenheit der Kautschukmischungsbestandteile. Möglich wäre jedoch eine Temperaturerhöhung oder -verringerung des fluiden Mediums um das Einmischen der Weichmacher aus Schritt e1) zu verbessern.

### Bezugszeichenliste:

1 Achse für die Temperatur
2 Achse für die Drehzahl der Rotoren in der Mischkammer
3 Achse für die Zykluszeit eines erfindungsgemäßen Verfahrens.
4 Messlinie der Messwerte für die Temperatur der Mischung der Kautschukbestandteile
5 Messlinie der Messwerte für die Temperatur des fluiden Mediums
6 Messlinie der Messwerte für die Drehzahl der Rotoren in der Mischkammer
c) Phase des Verfahrensschritts c); Vorbereitungsphase
e0) Phase des Verfahrensschritts e0); Vormischphase
e1) Phase des Verfahrensschritts e1); erste Mischphase
e2) Phase des Verfahrensschritts e2); zweite Mischphase
f) Phase des Verfahrensschritts f); Abkühlphase

## Patentansprüche

1. Verfahren zur Herstellung einer Kautschukmischung umfassend die folgenden Schritte:
a) Bereitstellen oder Herstellen von Kautschukmischungsbestandteilen,
b) Bereitstellen einer Mischvorrichtung zum Mischen von Kautschukmischungen, wobei die Mischvorrichtung
i. eine erste Mischkammer der mehr als einen Mischkammern der Mischvorrichtung, wobei die erste Mischkammer von einem ersten Kammergehäuse, einer ersten Einwurfsöffnung und einer ersten Auswurfsöffnung begrenzt wird,
ii. einen, zwei oder mehr als zwei Rotoren zum Mischen einer Kautschukmischung innerhalb der ersten Mischkammer und innerhalb einer der weiteren Mischkammern
und
iii. ein fluides Medium zum Temperieren der ersten Mischkammer umfasst,
c) Temperieren des fluiden Mediums in einer Vorbereitungsphase auf eine Vorbereitungstemperatur im Bereich von 30 °C bis 160 °C,
d) Hinzufügen zumindest eines Teils der in Schritt a) bereitgestellten oder hergestellten Kautschukmischungsbestandteile in die Mischkammer der Mischvorrichtung,
e) Temperieren des in Schritt c) temperierten fluiden Mediums in einer Mischphase auf eine Mischtemperatur im Bereich von 40 °C bis 160 °C,
und
f) Temperieren des in Schritt e) temperierten fluiden Mediums in einer Abkühlphase auf eine Abkühltemperatur im Bereich von 4 °C bis 60 °C,
wobei eine programmierbare Regelkomponente die Temperatur des fluiden Mediums für jeden einzelnen der Mischschritte von c) bis f) individuell ansteuert oder regelt.

2. Verfahren nach Anspruch 1, wobei die in Schritt a) bereitgestellten oder hergestellten Kautschukmischungsbestandteile zumindest einen Kautschuk und zumindest einen Füllstoff umfassen.

3. Verfahren nach Anspruch 1 oder Anspruch 2, wobei die Schritte e) und f) die folgenden Schritte umfassen:
e1) Temperieren des in Schritt c) temperierten fluiden Mediums in einer ersten Mischphase auf eine erste Mischtemperatur im Bereich von 70 °C bis 160 °C,
e2) Temperieren des in Schritt e1) temperierten fluiden Mediums in einer zweiten Mischphase auf eine zweite Mischtemperatur im Bereich von 40 °C bis 160 °C,
und
f) Temperieren des in Schritt e2) temperierten fluiden Mediums in einer Abkühlphase auf eine Abkühltemperatur im Bereich von 4 °C bis 60 °C.

4. Verfahren nach Anspruch 3, wobei der Schritt e1) die folgenden Schritte umfassen:
e0) Temperieren des in Schritt c) temperierten fluiden Mediums in einer Vormischphase auf eine Vormischtemperatur im Bereich von 70 °C bis 160 °C,
e1) Temperieren des in Schritt e0) temperierten fluiden Mediums in einer ersten Mischphase auf eine erste Mischtemperatur im Bereich von 70 °C bis 130 °C,

5. Verfahren nach Anspruch 3 oder Anspruch 4, wobei in Schritt e1):
a. die erste Mischtemperatur stetig sinkt
und/oder
b. weitere Mischungsbestandteile zu den Kautschukmischungsbestandteilen oder der Kautschukmischung in die Mischkammer hinzugefügt werden, wobei die weiteren Mischungsbestandteile mindestens eine, mindestens zwei oder mindestens drei Verbindungen umfassen ausgesucht aus der Gruppe bestehend aus: Wachsen, Ölen, Alterungsschutzmitteln und Stearinsäure.

6. Verfahren nach einem der Ansprüche 3 bis 5, wobei die Drehzahl der Rotoren innerhalb der ersten Mischkammer in Schritt e0) und/oder in Schritt e1) im Bereich von 40 bis 70 U/min liegt.

7. Verfahren nach einem der vorangehenden Ansprüche, wobei die Drehzahl der Rotoren innerhalb der ersten Mischkammer in Schritt e2) und/oder in Schritt f) im Bereich von 10 bis 40 U/min liegt.

8. Verfahren nach einem der vorangehenden Ansprüche, wobei die Drehzahl der Rotoren innerhalb der ersten Mischkammer in Schritt f) und/oder in Schritt e2) kleiner ist als in den Schritten e0) und el).

9. Verfahren nach einem der vorangehenden Ansprüche, wobei die Durchflussrate des fluiden Mediums über die gesamte erste Mischkammer in Schritt c) und/oder in Schritt f) größer ist als in dem Schritt e) oder den Schritten e1) und e2) oder den Schritten e0), e1) und e2).

10. Verfahren nach einem der vorangehenden Ansprüche, wobei das fluide Medium mindestens eine Verbindung umfasst ausgesucht aus der Gruppe bestehend aus Wasser, Wasserdampf, zwischen 0 °C und 160°C flüssigen Kohlenwasserstoffen, zwischen 0 °C und 160°C flüssigen einwertigen oder mehrwertigen Alkoholen und Öl.

11. Mischvorrichtung zur Durchführung eines Verfahrens gemäß den vorangehenden Ansprüchen umfassend:
i. eine erste Mischkammer der mehr als einen Mischkammern der Mischvorrichtung, wobei die erste Mischkammer von einem ersten Kammergehäuse, einer ersten Einwurfsöffnung und einer ersten Auswurfsöffnung begrenzt wird,
ii. einen, zwei oder mehr als zwei Rotoren zum Mischen einer Kautschukmischung innerhalb der ersten Mischkammer,
iii. mindestens ein fluides Medium zum Temperieren der ersten Mischkammer,
**dadurch gekennzeichnet, dass** die Mischvorrichtung aufweist:
- mehr als eine Mischkammer und einen, zwei oder mehr als zwei Rotoren zum Mischen einer Kautschukmischung innerhalb einer der weiteren Mischkammern
und
- eine programmierbare Regelkomponente, wobei die programmierbare Regelkomponente die Temperatur des fluiden Mediums für jeden einzelnen der Mischschritte von c) bis f) individuell ansteuern oder regeln kann.

## Claims

1. Method for producing a rubber mixture, comprising the following steps of:
a) providing or producing rubber mixture constituents,
b) providing a mixing device for mixing rubber mixtures, wherein the mixing device comprises
i. a first mixing chamber of the more than one mixing chambers of the mixing device, wherein the first mixing chamber is delimited by a first chamber housing, a first introduction opening and a first discharge opening,
ii. one, two or more than two rotors for mixing a rubber mixture within the first mixing chamber and within one of the further mixing chambers,
and
iii. a fluid medium for controlling the temperature of the first mixing chamber,
c) controlling the temperature of the fluid medium in a preparation phase to a preparation temperature in the range from 30°C to 160°C,
d) adding at least a fraction of the rubber mixture constituents provided or produced in step a) into the mixing chamber of the mixing device,
e) controlling the temperature of the fluid medium temperature-controlled in step c) in a mixing phase to a mixing temperature in the range from 40°C to 160°C,
and
f) controlling the temperature of the fluid medium temperature-controlled in step e) in a cooling phase to a cooling temperature in the range from 4°C to 60°C,
wherein a programmable control component individually controls or regulates the temperature of the fluid medium for each of the individual mixing steps of c) to f).

2. Method according to Claim 1, wherein the rubber mixture constituents provided or produced in step a) comprise at least one rubber and at least one filler.

3. Method according to Claim 1 or Claim 2, wherein steps e) and f) comprise the following steps of:
e1) controlling the temperature of the fluid medium temperature-controlled in step c) in a first mixing phase to a first mixing temperature in the range from 70°C to 160°C,
e2) controlling the temperature of the fluid medium temperature-controlled in step e1) in a second mixing phase to a second mixing temperature in the range from 40°C to 160°C,
and
f) controlling the temperature of the fluid medium temperature-controlled in step e2) in a cooling phase to a cooling temperature in the range from 4°C to 60°C.

4. Method according to Claim 3, wherein step e1) comprises the following steps of:
e0) controlling the temperature of the fluid medium temperature-controlled in step c) in a premixing phase to a premixing temperature in the range from 70°C to 160°C,
e1) controlling the temperature of the fluid medium temperature-controlled in step e0) in a first mixing phase to a first mixing temperature in the range from 70°C to 130°C.

5. Method according to Claim 3 or Claim 4, wherein in step e1) :
a. the first mixing temperature continuously decreases
and/or
b. further mixture constituents relating to the rubber mixture constituents or the rubber mixture are added into the mixing chamber, wherein the further mixture constituents comprise at least one, at least two or at least three compounds selected from the group consisting of: waxes, oils, ageing inhibitors and stearic acid.

6. Method according to one of Claims 3 to 5, wherein the rotational speed of the rotors within the first mixing chamber in step e0) and/or in step e1) lies in the range from 40 to 70 rpm.

7. Method according to one of the preceding claims, wherein the rotational speed of the rotors within the first mixing chamber in step e2) and/or in step f) lies in the range from 10 to 40 rpm.

8. Method according to one of the preceding claims, wherein the rotational speed of the rotors within the first mixing chamber in step f) and/or in step e2) is slower than in steps e0) and e1).

9. Method according to one of the preceding claims, wherein the flow rate of the fluid medium through the entire first mixing chamber in step c) and/or in step f) is greater than in step e) or steps e1) and e2) or steps e0), e1) and e2) .

10. Method according to one of the preceding claims, wherein the fluid medium comprises at least one compound selected from the group consisting of water, steam, hydrocarbons which are liquid between 0°C and 160°C, monohydric or polyhydric alcohols which are liquid between 0°C and 160°C and oil.

11. Mixing device for carrying out a method according to the preceding claims, comprising:
i. a first mixing chamber of the more than one mixing chambers of the mixing device, wherein the first mixing chamber is delimited by a first chamber housing, a first introduction opening and a first discharge opening,
ii. one, two or more than two rotors for mixing a rubber mixture within the first mixing chamber,
iii. at least one fluid medium for controlling the temperature of the first mixing chamber, **characterized in that** the mixing device comprises:
- more than one mixing chamber and one, two or more than two rotors for mixing a rubber mixture within one of the further mixing chambers,
and
- a programmable control component, wherein the programmable control component can individually control or regulate the temperature of the fluid medium for each of the individual mixing steps of c) to f) .

## Revendications

1. Procédé de production d'un mélange de caoutchouc, le procédé comprenant les étapes suivantes :
a) fournir ou produire des ingrédients de mélanges de caoutchouc,
b) fournir un dispositif de mélange destiné à mélanger des mélanges de caoutchouc, le dispositif de mélange comprenant
i. une première chambre de mélange parmi plusieurs chambres de mélange du dispositif de mélange, la première chambre de mélange étant délimitée par un premier boîtier de chambre, une première ouverture d'injection et une première ouverture d'éjection,
ii. un, deux ou plus de deux rotors destinés à mélanger un mélange de caoutchouc dans la première chambre de mélange et dans l'une des autres chambres de mélange,
et
iii. un milieu fluide destiné à réguler la température de la première chambre de mélange,
c) réguler la température du milieu fluide dans une phase de préparation à une température de préparation dans la plage allant de 30 °C à 160 °C,
d) ajouter au moins une partie des ingrédients de mélanges de caoutchouc fournis ou produits à l'étape a) dans la chambre de mélange du dispositif de mélange,
e) réguler la température du milieu fluide, régulé en température à l'étape c), dans une phase mixte à une température mixte dans la plage allant de 40 °C à 160 °C,
et
f) réguler la température du milieu fluide, régulé en température à l'étape e), dans une phase de refroidissement à une température de refroidissement dans la plage allant de 4 °C à 60 °C,
un composant de régulation programmable commandant ou régulant individuellement la température du milieu fluide pour chacune des étapes de mélange c) à f).

2. Procédé selon la revendication 1, les ingrédients de mélanges de caoutchouc fournis ou produits à l'étape a) comprenant au moins un caoutchouc et au moins une charge.

3. Procédé selon la revendication 1 ou la revendication 2, les étapes e) et f) comprenant les étapes suivantes :
e1) réguler la température du milieu fluide, régulé en température à l'étape c), dans une première phase de mélange à une première température de mélange dans la plage allant de 70 °C à 160 °C,
e2) réguler la température du milieu fluide, régulé en température à l'étape e1), dans une deuxième phase de mélange à une deuxième température de mélange dans la plage allant de 40 °C à 160 °C, et
f) réguler la température du milieu fluide, régulé en température à l'étape e2), dans une phase de refroidissement à une température de refroidissement dans la plage allant de 4 °C à 60 °C.

4. Procédé selon la revendication 3, l'étape e1) comprenant les étapes suivantes :
e0) réguler la température du milieu fluide, régulé en température à l'étape c), dans une phase de pré-mélange à une température de pré-mélange dans la plage allant de 70 °C à 160 °C,
e1) réguler la température du milieu fluide, régulé en température à l'étape e0), dans une première phase de mélange à une première température de mélange dans la plage allant de 70 °C à 130 °C.

5. Procédé selon la revendication 3 ou la revendication 4, à l'étape e1) :
a. la première température de mélange diminuant régulièrement et/ou
b. d'autres ingrédients de mélanges étant ajoutés aux ingrédients de mélange de caoutchouc ou au mélange de caoutchouc dans la chambre de mélange, les autres ingrédients de mélange comprenant au moins un, au moins deux ou au moins trois composés choisis dans le groupe comprenant : les cires, les huiles, les agents antivieillissement et l'acide stéarique.

6. Procédé selon l'une des revendications 3 à 5, la vitesse de rotation des rotors dans la première chambre de mélange à l'étape e0) et/ou à l'étape e1) étant dans la plage allant de 40 à 70 tr/min.

7. Procédé selon l'une des revendications précédentes, la vitesse de rotation des rotors dans la première chambre de mélange à l'étape e2) et/ou à l'étape f) étant dans la plage allant de 10 à 40 tr/min.

8. Procédé selon l'une des revendications précédentes, la vitesse de rotation des rotors dans la première chambre de mélange à l'étape f) et/ou à l'étape e2) étant inférieure à celle des étapes e0) et e1).

9. Procédé selon l'une des revendications précédentes, le débit du milieu fluide sur toute la première chambre de mélange à l'étape c) et/ou à l'étape f) étant supérieur à celui de l'étape e) ou des étapes e1) et e2) ou des étapes e0), e1) et e2).

10. Procédé selon l'une des revendications précédentes, le milieu fluide comprenant au moins un composé choisi dans le groupe comprenant l'eau, la vapeur d'eau, des hydrocarbures liquides entre 0 °C et 160 °C, des alcools monovalents ou polyvalents liquides entre 0 °C et 160 °C et l'huile.

11. Dispositif de mélange destiné à mettre en œuvre un procédé selon les revendications précédentes, le dispositif comprenant :
i. une première chambre de mélange parmi plusieurs chambres de mélange du dispositif de mélange, la première chambre de mélange étant délimitée par un premier boîtier de chambre, une première ouverture d'injection et une première ouverture d'éjection,
ii. un, deux ou plus de deux rotors destinés à mélanger un mélange de caoutchouc dans la première chambre de mélange et dans l'une des autres chambres de mélange,
et
iii. un milieu fluide destiné à réguler la température de la première chambre de mélange,
**caractérisé en ce que** le dispositif de mélange comprend :
- plus d'une chambre de mélange et un, deux ou plus de deux rotors destinés à mélanger un mélange de caoutchouc dans l'une des autres chambres de mélange,
et
- un composant de régulation programmable, le composant de régulation programmable pouvant commander ou réguler individuellement la température du milieu fluide pour chacune des étapes de mélange de c) à f).
